# EUROPÄISCHE PATENTANMELDUNG

(11) **EP 4 179 859 A1**
(43) Veröffentlichungstag der Anmeldung: **17.05.2023**
(21) Anmeldenummer: 22210069.5
(22) Anmeldetag: 01.04.2021
(51) Int. Cl.: A01C 7/08

(54) **PNEUMATISCHE VERTEILMASCHINE**

(30) Priorität: 08.04.2020 DE 102020109791
(62) Teilanmeldung aus: 21716700.6
(71) Anmelder: Amazonen-Werke H. Dreyer SE & Co. KG, 49205 Hasbergen (DE)
(72) Erfinder: WIEN, Thomas, 28816 Stuhr (DE)

(57) **Zusammenfassung**

Pneumatische Verteilmaschine (1) für körniges Material, mit zumindest einem Vorratsbehälter (4) für das körnige Material, zumindest einem Fördergebläse (3) zur Erzeugung einer Luft-Material-Hauptströmung, zumindest einem Verteilerkopf (6), welcher dazu eingerichtet ist, die dem Verteilerkopf (6) zugeleitete Luft-Material-Hauptströmung in mehrere Luft-Material-Einzelströmungen aufzuteilen, einer langen, das Fördergebläse (3), den Vorratsbehälter (4) und den Verteilerkopf (6) verbindenden Hauptförderleitung (2) und zumindest einer Rückführeinrichtung (7), welche ein bewegliches Umlenkelement (8) aufweist, welches dazu eingerichtet ist, in einer Ausbringstellung eine in einen Einströmbereich (9) der Rückführeinrichtung (7) einströmende Luft-Material-Einzelströmung einem mit einer Ausbringleitung (10) verbundenen Ausbringbereich (11) der Rückführeinrichtung (7) zuzuleiten und in einer Absperrstellung eine in den Einströmbereich (9) der Rückführeinrichtung (7) einströmende Luft-Material-Einzelströmung einem mit einer Rückführleitung (12) der Rückführeinrichtung (7) verbundenen Rückführbereich (14) zuzuleiten. Um die Verteilmaschine (1) weiterzubilden, ist vorgesehen, dass die Rückführeinrichtung (7) eine den Rückführbereich (14) der Rückführeinrichtung (7) und den Ausbringbereich (11) der Rückführeinrichtung (7) verbindende Bypassleitung (13) aufweist.

## Beschreibung

Die Erfindung betrifft eine pneumatische Verteilmaschine gemäß dem Oberbegriff des Patentanspruches 1.

Eine derartige Verteilmaschine ist in EP 642 729 A1 beschrieben. Die Verteilmaschine kann als Drillmaschine oder Einzelkornsämaschine ausgeführt sein und wird zur Verteilung von körnigem Material, wie Saatgut und/oder Dünger, über eine Mehrzahl nebeneinander angeordneter Ausbringeinrichtungen, wie Bodenbearbeitungswerkzeugen, genutzt. Diese Verteilmaschine verfügt über eine Einzelreihenschaltung, die es erlaubt die Ausbringung an einzelnen Ausbringeinrichtungen zu unterbrechen.

Um die Einzelreihenschaltung zu ermöglichen, weist die Verteilmaschine einen Verteilerkopf auf, der dazu eingerichtet ist, eine ihm aus einem Vorratsbehälter mittels eines Fördergebläses zugeleitete Luft-Material-Hauptströmung in mehrere Luft-Material-Einzelströmungen aufzuteilen. Von dem Verteilerkopf gelangt die Luft-Material-Einzelströmung in eine Rückführeinrichtung oder alternativ direkt in eine Ausbringleitung, welche das körnige Material zu einer der Ausbringeinrichtungen befördert. Die Anzahl der Rückführeinrichtungen entspricht hierbei der Anzahl der Ausbringeinrichtungen an denen die Ausbringung unterbrochen werden kann.

Die Rückführeinrichtung weist ein Umlenkelement auf, welches dazu eingerichtet ist, in einer Ausbringstellung eine in einen Einströmbereich der Rückführeinrichtung einströmende Luft-Material-Einzelströmung einem mit einer Ausbringleitung verbundenen Ausbringbereich der Rückführeinrichtung zuzuleiten und in einer Absperrstellung eine in den Einströmbereich der Rückführeinrichtung einströmende Luft-Material-Einzelströmung einem mit einer Rückführleitung der Rückführeinrichtung verbundenen Rückführbereich zuzuleiten. Über die Rückführleitung gelangt das nicht ausgebrachte Material so zurück in die Hauptförderleitung und steht wieder zur Ausbringung zur Verfügung.

Das Fördergebläse und der Vorratsbehälter sind in einer Ausführungsform dieser Verteilmaschine im Frontanbau eines Ackerschleppers angeordnet, während der Verteilerkopf und die Ausbringeinrichtungen im Heckanbau angeordnet sind, so dass eine das Fördergebläse, den Vorratsbehälter, und insbesondere die Dosiereinrichtung, und den Verteilerkopf verbindende Hauptförderleitung besonders lang, insbesondere mehrere Meter lang, ausgeführt ist. Die Hauptförderleitung erstreckt sich somit zwischen dem Fördergebläse und dem Verteilerkopf, insbesondere über zumindest 8 Meter. Es sind ferner gezogene Verteilmaschinen bekannt, bei denen regelmäßig eine besonders lange, zumindest 4 Meter lange, Hauptförderleitung zwischen dem nahe des Vorratsbehälter angeordneten Fördergebläse und den Ausbringeinrichtungen bzw. dem Verteilerkopf erforderlich ist, weil die Vorratsbehälter sich lang in Fahrtrichtung erstrecken und der Verteilerkopf nahe der Ausbringeinrichtungen dahinter und/oder seitlich davon angeordnet ist. Derartig lange Hauptförderleitungen weisen allerdings regelmäßig das Problem auf, dass über ihre Länge an den Leitungswandungen entstehende Reibung einen erheblichen Druckverlust erzeugen. Diese Energie steht der Luft-Material-Hauptströmung somit nicht zur Förderung des Materials zur Verfügung, woraus eine reduzierte Fördergeschwindigkeit resultiert. Besonders problematisch ist, dass sich bei reduzierter Fördergeschwindigkeit Ablagerungen des körnigen Materials in der Hauptförderleitung bilden können, welche eine sogenannte Schwallförderung auslöst. Schwallförderung, das heißt, dass das Teile des in der Hauptförderleitung abgelagerten Materials von der Luft-Material-Hauptströmung mitgerissen werden, was zu einer Mengenschwankungen bei Verteilung des körnigen Materials durch die Ausbringeinrichtungen führt und somit eine ungleichmäßige Ausbringung bedingt.

Ferner problematisch bei der in der EP 642 729 A1 offenbarten Verteilmaschine ist, dass in der Absperrstellung angeordnete Umlenkelemente der Rückführeinrichtungen einen zusätzlichen Druckverlust erzeugen. Die Luft-Material-Einzelströmung kann in diesem Fall nicht entweichen und wird zusätzlich zu der Luft-Material-Hauptströmung wieder in die Hauptförderleitung eingespeist, wodurch ein ungewollter Staudruck entsteht. Mit zunehmender Anzahl von Ausbringeinrichtungen deren Ausbringung unterbrochen ist, also Rückführeinrichtungen deren Umlenkelemente in der Absperrstellung angeordnet sind, steigt der Druckverlust in der Hauptförderleitung somit weiter. Übersteigt der Druckverlust bzw. unterschreitet die Fördergeschwindigkeit eine kritische Schwelle kann die Luft-Material-Hauptströmung zusammenbrechen.

Die vorstehend beschriebene Verteilmaschine sieht zur Linderung dieser Probleme Zuluftdüsen vor, an denen durch eine Querschnittsverengung der Hauptförderleitung eine Sogwirkung an der zur Umgebung geöffneten Zuluftdüse entstehen soll, so dass genügend Förderluft zur Verfügung steht. Allerdings wird das ist der Luft-Material-Hauptströmung geförderte körnige Material durch die Querschnittsverengung abgebremst, was dem gewünschten Effekt insofern entgegenwirkt, als dass ausreichend Förderluft auf Kosten reduzierter Fördergeschwindigkeit zur Verfügung gestellt wird. Die Probleme sinkender Fördergeschwindigkeit infolge großer Druckverluste in langen Hauptförderleitungen lassen sich somit nur unzureichend beheben.

Die der Erfindung zugrunde liegende Aufgabe besteht folglich darin, eine Verteilmaschine mit langer Hauptförderleitung weiterzubilden und die im Stand der Technik bekannten Nachteile zu vermeiden. Insbesondere soll der Druckverlust in der Hauptförderleitung und/oder am Verteilerkopf reduziert werden.

Diese Aufgabe wird erfindungsgemäß durch eine Verteilmaschine mit den Merkmalen der unabhängigen Anspruchs 1 gelöst. Vorteilhafte Weiterbildungen der erfindungsgemäßen Verteilmaschine sind Gegenstand der abhängigen Unteransprüche.

Erfindungsgemäß ist vorgesehen, dass die Rückführeinrichtung eine den Rückführbereich der Rückführeinrichtung und den Ausbringbereich der Rückführeinrichtung verbindende Bypassleitung aufweist. Die Erfindung macht sich die Erkenntnis zunutze, dass durch die pneumatische Verbindung zwischen dem Rückführbereich und dem Ausbringbereich der durch eine Rückführeinrichtung, deren Umlenkelement insbesondere in der Absperrstellung angeordnet ist, entstehende Staudruck in vorteilhafter Weise reduziert ist. Dem Verteilerkopf zugeleitete überschüssige Förderluft aus der Luft-Material-Hauptströmung ist über die Bypassleitung, insbesondere über die Ausbringleitung vorzugsweise an die Ausbringeinrichtungen, ableitbar, so dass der Staudruck und somit der Druckverlust in der Hauptförderleitung und am Verteilerkopf reduziert ist.

In einer vorteilhaften Weiterbildung der erfindungsgemäßen Verteilmaschine ist vorgesehen, dass die lange Hauptförderleitung einen durchströmten Querschnitt mit einem Durchmesser und eine durchströmte Länge aufweist, wobei das Verhältnis von Länge zu Durchmesser zumindest 30 beträgt. Untersuchungen haben gezeigt, dass die Erfindung ab einem Durchmesser-Länge-Verhältnis von 30 besondere Wirkung zeigt. Je größer das Verhältnis von Durchmesser zu Länge der Hauptförderleitung ist, umso vorteilhafter wirkt die Erfindung.

Um den Staudruck in der Hauptförderleitung und am Verteilerkopf und somit den Druckverlust weiter zu senken, ist in einer weiteren vorteilhaften Weiterbildung der Erfindung die Rückführleitung der Rückführeinrichtung mit einem Einspeisebereich der Hauptförderleitung verbunden, wobei die Hauptförderleitung zwischen dem Einspeisebereich und dem Verteilerkopf einen größeren Querschnitt aufweist als in Strömungsrichtung vor dem Einspeisebereich. Die Hauptförderleitung ist zwischen dem Einspeisebereich und dem Verteilerkopf somit dazu eingerichtet, eine erhöhte Förderluftmenge und/oder Menge der Luft-Material-Hauptströmung zu fördern. Eine Erhöhung der förderbaren Strömungs-Menge reduziert das Risiko, dass sich ein messbarer Staudruck bildet. Insbesondere ist vorgesehen, dass die Hauptförderleitung zwischen dem Einspeisebereich und dem Verteilerkopf einen größeren Durchmesser aufweist als im Bereich einer in Strömungsrichtung vor dem Einspeisebereich angeordneten Düse, welche in die Hauptförderleitung integriert ist. Somit ist die Wirkung der Düse in vorteilhafter Weise verbessert. Die Düse kann austauschbar sein, so dass sich ihre Wirkung in der Hauptförderleitung einstellen lässt durch die Wahl einer Düse mit geeignetem Durchmesser.

In einer vorteilhaften Weiterbildung der vorstehenden Ausführungsform der erfindungsgemäßen Verteilmaschine ist vorgesehen, dass das Verhältnis von Länge der Hauptförderleitung zu dem größeren Durchmesser der Hauptförderleitung zwischen dem Einspeisebereich und dem Verteilerkopf zumindest 25 beträgt.

In einer weiteren vorteilhaften Ausführungsform der erfindungsgemäßen Verteilmaschine weist die lange Hauptförderleitung zumindest zwei, vorzugsweise zumindest drei, flexible Schlauchelemente auf. Mittels eines flexiblen Schlauchelementes sind zwei durch das Schlauchelement verbundene Teile der Hauptförderleitung relativ zueinander beweglich, so dass mittels der Hauptförderleitung zueinander verstellbare und/oder klappbare Komponenten der Verteilmaschine verbindbar sind. Das Fördergebläse, der Vorratsbehälter und der Verteilerkopf können beweglich gelagert sein, so dass die Hauptförderleitung infolge dieser Maßnahme, insbesondere über mehrere Meter, dazu eingerichtet ist, diese Komponenten der Verteilmaschine zu verbinden. Die Verteilmaschine ist infolge dieser Maßnahme dazu eingerichtet, in Arbeitsstellung große Arbeitsbreiten abzudecken und für die Transportfahrt auf öffentlichen Straßen auf die zulässige Transportbreite beschränkt zu werden durch Verbringung zweier mit Hilfe eines flexiblen Schlauchelements verbundenen Komponenten relativ zueinander.

Um die Luft-Material-Hauptströmung dem Verteilerkopf mit geringem Druckverlust zuzuleiten, ist die erfindungsgemäße Verteilmaschine ferner dahingehend vorteilhaft weitergebildet, dass die lange Hauptförderleitung zumindest zwei Krümmer, vorzugsweise mit zumindest 90 Grad Krümmung, aufweist. Die Krümmer können einzeln oder in Summe vorzugsweise eine 90 Grad Krümmung erreichen. Es ist insbesondere vorstellbar, dass beide Krümmer eine Krümmung von 45 Grad aufweisen.

Die erfindungsgemäße Verteilmaschine ist ferner vorteilhaft dadurch weitergebildet, dass das Umlenkelement dazu eingerichtet ist, die Bypassleitung in der Ausbringstellung abzusperren. Eine Leckage der Luft-Material-Einzelströmung von der Rückführeinrichtung in Richtung der Hauptförderleitung ist somit in vorteilhafter Weise unterbunden. Ferner entsteht in der Hauptförderleitung somit kein Druckverlust, da die Luft-Material-Hauptströmung in der Ausbringstellung des Umlenkelements nicht über den Bypass entweichen kann.

In einer besonders vorteilhaften Weiterbildung der erfindungsgemäßen Verteilmaschine ist das Umlenkelement dazu eingerichtet, die Bypassleitung in der Absperrstellung freizugeben. Somit ist die Bypassleitung in der Absperrstellung des Umlenkelements geöffnet, so dass überschüssige Förderluft aus der Luft-Material-Einzelströmung abgeschieden werden kann und der durch die zurückgeführte Luft-Material-Einzelströmung verursachte Staudruck reduziert ist.

Um das Umlenkelement für seine Funktionen in vorteilhafter Weise geometrisch auszuformen, ist in einer weiteren vorteilhaften Weiterbildung der erfindungsgemäßen Verteilmaschine vorgesehen, dass das Umlenkelement als Wippe mit zwei Wippenschenkeln ausgebildet ist, wobei sich die Wippenschenkel jeweils von einer Drehachse des Umlenkelements radial nach außen erstrecken.

Die erfindungsgemäße Verteilmaschine, bei der das Umlenkelement als Wippe ausgebildet ist, ist ferner vorteilhaft dadurch weitergebildet, dass ein Wippenschenkel des Umlenkelements dazu eingerichtet ist, in der Ausbringstellung des Umlenkelements die Bypassleitung der Rückführeinrichtung abzusperren. Alternativ oder zusätzlich ist ein Wippenschenkel des Umlenkelements dazu eingerichtet ist, in der Ausbringstellung des Umlenkelements einen Durchgang zwischen dem Einströmbereich der Rückführeinrichtung und dem Rückführbereich der Rückführeinrichtung abzusperren. Alternativ oder zusätzlich ist vorgesehen, dass zumindest ein Wippenschenkel des Umlenkelements dazu eingerichtet ist, in der Absperrstellung des Umlenkelements einen Durchgang zwischen dem Einströmbereich der Rückführeinrichtung und dem Ausbringbereich der Rückführeinrichtung abzusperren. In vorteilhafter Weise ist das als Wippe ausgeführte Umlenkelement so mit einer Doppelfunktion versehen.

In einer weiteren vorteilhaften Weiterbildung der erfindungsgemäßen Verteilmaschine ist vorgesehen, dass die Hauptförderleitung einen Druckwiderstand aufweist, wobei der Druckwiderstand zumindest ein Drittel der von dem Fördergebläse erzeugbaren Druckdifferenz beträgt. Der Druckwiderstand der Hauptförderleitung kann sich aus der Summe der Druckwiderstände seiner Komponenten zwischen dem Fördergebläse und dem Verteilerkopf ergeben. Untersuchungen haben gezeigt, dass das Fördergebläse gemäß dieser Weiterbildung geeignet auf die Hauptförderleitung abgestimmt ist und die Erfindung ab diesem Verhältnis von Druckwiderstand zu mittels dem Fördergebläse erzeugbarer Druckdifferenz besondere Wirkung hat.

Eine weitere vorteilhafte Ausführungsform der erfindungsgemäßen Verteilmaschine zeichnet sich dadurch aus, dass die Verteilmaschine eine Anzahl von Rückführeinrichtungen umfasst, wobei die Umlenkelemente einer ersten Teilmenge der Anzahl von Rückführeinrichtungen zwischen der Ausbringstellung und der Absperrstellung verbringbar sind und die Umlenkelemente einer zweiten Teilmenge, die insbesondere der Menge der übrigen Rückführeinrichtungen entspricht, der Anzahl von Rückführeinrichtungen, vorzugsweise dauerhaft, in der Absperrstellung angeordnet sind. Die Verteilmaschine kann mehr Rückführeinrichtungen als Ausbringeinrichtungen aufweisen. Die Umlenkelemente der mit einer Ausbringeinrichtung über eine Ausbringleitung verbundenen Rückführeinrichtungen sind zwischen der Ausbringstellung und der Absperrstellung verbringbar. Die Umlenkelemente der Rückführeinrichtungen, die nicht mit einer Ausbringeinrichtung verbunden sind, können dauerhaft in der Absperrstellung angeordnet sein, wobei die Ausbringbereiche dieser Rückführeinrichtungen mit einer Abluftleitung verbunden sein können. Die Teilmenge der Rückführeinrichtungen, deren Umlenkelement in Absperrstellung angeordnet ist, kann somit in vorteilhafter Weise, vorzugsweise dauerhaft, zur Ableitung überschüssiger Förderluft genutzt werden. Dem Verteilerkopf ist somit eine erhöhte Menge der Luft-Material-Hauptströmung zuleitbar.

Weitere Einzelheiten der Erfindung sind der Beispielsbeschreibung und den Zeichnungen zu entnehmen. Die Zeichnungen zeigen
Fig.1 eine schematische Darstellung einer erfindungsgemäßen Verteilmaschine mit einem mit Rückführeinrichtungen versehenen Verteilerkopf,
Fig.2a eine Rückführeinrichtung in Ausbringstellung in Schnittansicht, und
Fig.2b die Rückführeinrichtung gemäß Fig.2a in Absperrstellung in Schnittansicht.

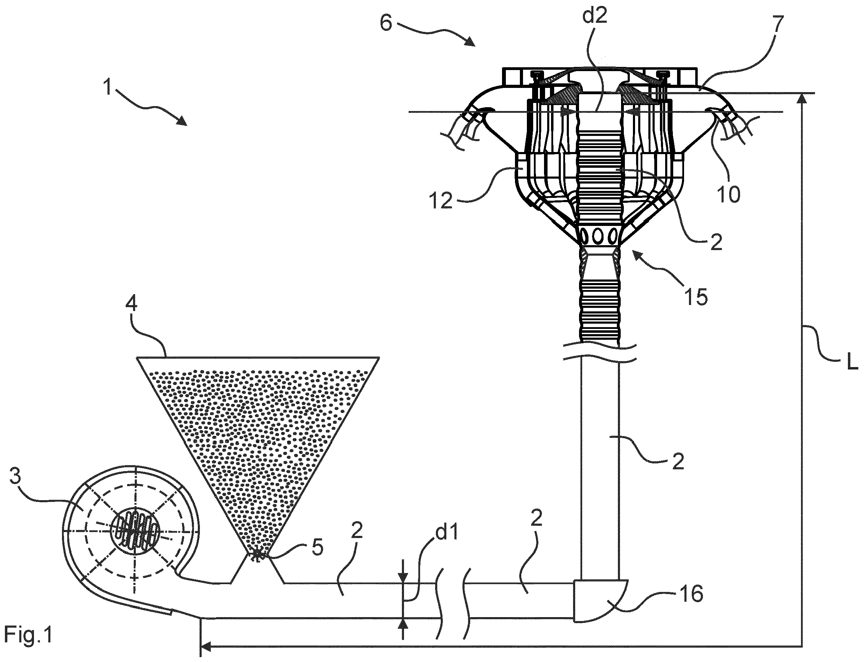

Eine erfindungsgemäße Verteilmaschine 1 mit einer langen Hauptförderleitung 2 ist in Fig.1 in schematischer Darstellung zu sehen. Die Hauptförderleitung 2 erstreckt sich über mehrere Meter, insbesondere zumindest 4 Meter, und verbindet ein Fördergebläse 3, einen Vorratsbehälter 4 für körniges Material, dem eine Dosiereinrichtung 5 für körniges Material zugeordnet ist, und einen Verteilerkopf 6 der Verteilmaschine 1. Die Dosiereinrichtung 5 ist dazu eingerichtet körniges Material, wie Saatgut und/oder Dünger, aus dem Vorratsbehälter 4 in einstellbarer Menge in die Hauptförderleitung 2 abzugeben. Das Fördergebläse 3 saugt Luft aus der Umgebung an, verdichtet diese und leitet sie in die Hauptförderleitung 2 ein, so dass eine Luft-Material Hauptströmung erzeugt wird. Das Fördergebläse 3 ist somit zur Erzeugung einer Druckdifferenz zwischen Umwelt und Hauptförderleitung 2 eingerichtet. Die Luft-Material-Hauptströmung wird über die Hauptförderleitung 2 dem Verteilerkopf 6 zugeleitet, welcher dazu eingerichtet ist, die zugeleitete Luft-Material-Hauptströmung in mehrere Luft-Material-Einzelströmungen aufzuteilen.

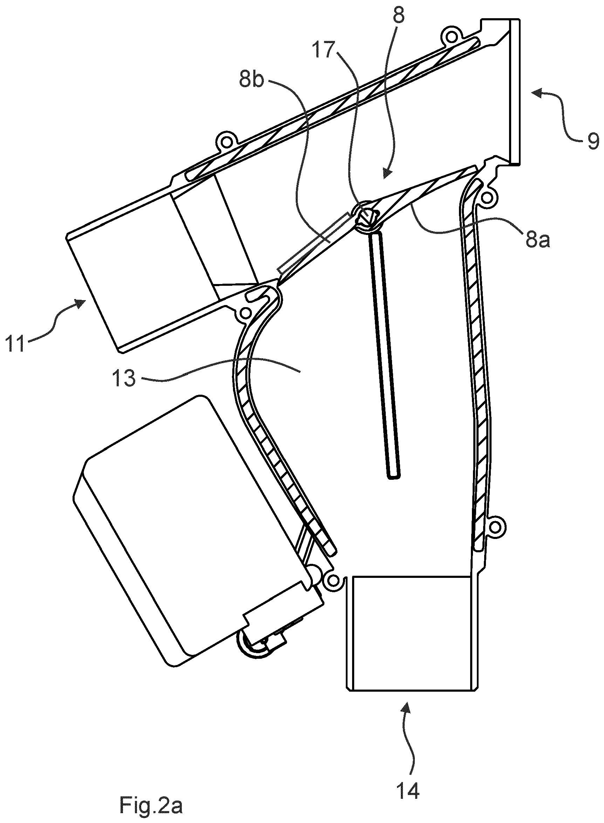

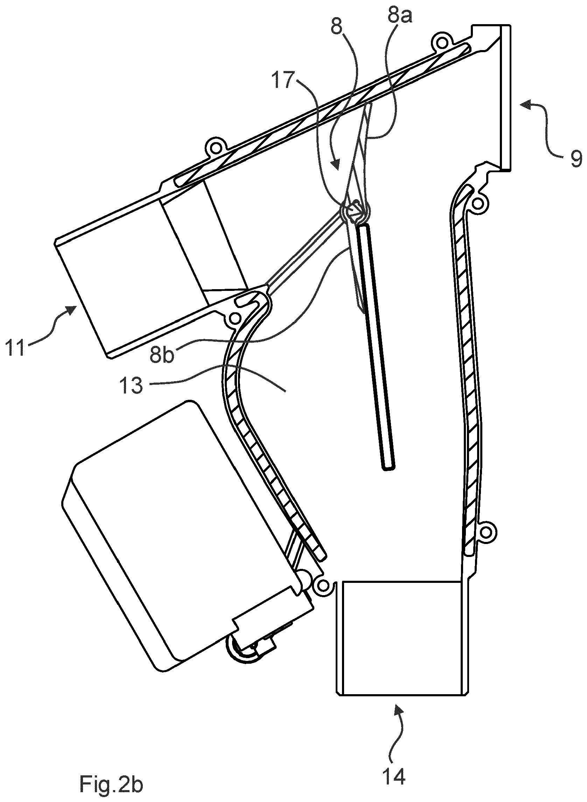

Dem Verteilerkopf 6 schließt sich eine Mehrzahl von Rückführeinrichtungen 7, in diesem Fall insgesamt 24 Stück von denen aufgrund der Schnittansicht nur 12 zu sehen sind, an, welche jeweils ein bewegliches Umlenkelement 8 aufweisen, das dazu eingerichtet ist, in einer Ausbringstellung, wie in Fig.2a gezeigt, eine in einen Einströmbereich 9 der Rückführeinrichtung 7 einströmende Luft-Material-Einzelströmung einem mit einer Ausbringleitung 10 verbundenen Ausbringbereich 11 der Rückführeinrichtung 7 zuzuleiten und in einer Absperrstellung, wie in Fig.2b gezeigt, eine in den Einströmbereich 9 der Rückführeinrichtung 7 einströmende Luft-Material-Einzelströmung einem mit einer Rückführleitung 12 der Rückführeinrichtung 7 verbundenen Rückführbereich 14 zuzuleiten. Die Rückführeinrichtung 7 ist mittels einer den Rückführbereich 14 der Rückführeinrichtung 7 und den Ausbringbereich 11 der Rückführeinrichtung 7 verbindende Bypassleitung 13 dazu eingerichtet, einen Staudruck im Verteilerkopf 6 und der Hauptförderleitung 2 zu reduzieren und den Druckverlust in der Hauptförderleitung 2 so zu senken.

Die Hauptförderleitung 2 erstreckt sich zwischen dem Fördergebläse 3 und dem Verteilerkopf 6 über eine durchströmte Länge L und weist dabei einen durchströmten Querschnitt mit einem Durchmesser d1 auf. Da sich die Hauptförderleitung 2 zumindest über mehrere Meter erstreckt, beträgt Verhältnis von Länge L zu Durchmesser d1 der Hauptförderleitung 2 zumindest 30. Zwischen einem mit den Rückführleitungen 12 der Rückführeinrichtungen 7 verbundenen Einspeisebereich 15 und dem Verteilerkopf 6 weist die Hauptförderleitung 2 jedoch einen größeren Querschnitt mit einem zweiten Durchmesser d2 auf als in Strömungsrichtung vor dem Einspeisebereich 15. Bei dieser Verteilmaschine 1 beträgt das Verhältnis von Länge L der Hauptförderleitung 2 zu dem zweiten, größeren Durchmesser d2 der Hauptförderleitung 2 zwischen dem Einspeisebereich 15 und dem Verteilerkopf 6 zumindest 25. In Strömungsrichtung vor dem Einspeisebereich 15 ist eine Düse angeordnet, welche in die Hauptförderleitung 2 integriert ist. Die Düse beschleunigt die Luft-Material-Hauptströmung zusätzlich vor dem Eintreten in den Abschnitt der Hauptförderleitung 2 mit dem zweiten, größeren Durchmesser d2 zwischen dem Einspeisebereich 15 und dem Verteilerkopf 6.

Da das Fördergebläse 3 und der Verteilerkopf 6 beweglich zueinander gelagert sind, ist vorgesehen, dass die Hauptförderleitung 2 mehrere nicht genauer dargestellte, flexible Schlauchelemente umfasst. Die Schlauchelemente verbinden zwei Teile der Hauptförderleitung 2 flexibel, so dass diese relativ zueinander bewegbar sind. Ferner weist die Hauptförderleitung 2 zumindest zwei Krümmer 16, von denen in Fig.1 nur ein einziger gezeigt ist, auf, um die Luft-Material-Hauptströmung dem Verteilerkopf 6 in geeigneter Weise zuzuleiten. Der Krümmer 16 weist bei der gezeigten Verteilmaschine 1 eine Krümmung von 90 Grad auf. Es ist ebenso denkbar zwei Krümmer 16 mit jeweils 45 Grad Krümmung zu verwenden. Die Hauptförderleitung 2 weist somit einen Druckwiderstand auf, der zumindest ein Drittel der von dem Fördergebläse 3 erzeugbaren Druckdifferenz beträgt.

In den Fig.2a, 2b ist eine Rückführeinrichtung 7 in Ausbringstellung und in Absperrstellung in Schnittansicht zu sehen. Wie Fig.2a zeigt, ist das Umlenkelement 8 dazu eingerichtet ist, die Bypassleitung 13 in der Ausbringstellung abzusperren. In der Absperrstellung, die in Fig.2b gezeigt ist, ist das Umlenkelement 8 hingegen dazu eingerichtet, die Bypassleitung 13 freizugeben. Das Umlenkelement 8 ist hierzu als Wippe mit zwei Wippenschenkeln 8a, 8b ausgebildet. Die Wippenschenkel 8a, 8b erstrecken sich von einer Drehachse 17 des Umlenkelements 8 radial nach außen.

Der eine Wippenschenkel 8b ist dazu eingerichtet, in der Ausbringstellung des Umlenkelements 8, gemäß Fig.2a, die Bypassleitung 13 der Rückführeinrichtung 7 abzusperren. Der andere Wippenschenkel 8a hingegen ist dazu eingerichtet, in der Ausbringstellung des Umlenkelements 8, wie Fig.2a zeigt, einen Durchgang zwischen dem Einströmbereich 9 der Rückführeinrichtung 7 und dem Rückführbereich 14 der Rückführeinrichtung 7 abzusperren und in der Absperrstellung des Umlenkelements 8, gemäß Fig.2b, einen Durchgang zwischen dem Einströmbereich 9 der Rückführeinrichtung 7 und dem Ausbringbereich 11 der Rückführeinrichtung 7 abzusperren.

Bei dieser Verteilmaschine 1 sind an den Verteilerkopf 6 insgesamt 24 Rückführeinrichtungen 7 angeschlossen, von denen wie bereits erläuterrt in der schematischen Darstellung in Fig.1 aufgrund der Schnittansicht des Verteilerkopfes 6 und dem mit dem Verteilerkopf 6 verbundenen Abschnitt der Hauptförderleitung 2 nur 12 zu sehen sind. Die Umlenkelemente 8 einer Teilmenge von 18 der 24 Rückführeinrichtungen 7 sind zwischen der Ausbringstellung, gemäß Fig.2a, und der Absperrstellung, gemäß Fig.2b, verbringbar, so dass an über Ausbringleitungen 10 mit den Ausbringbereichen 11 dieser Rückführeinrichtungen 7 verbundenen Ausbringeinrichtungen eine Einzelreihenschaltung umsetzbar ist. Die Umlenkelemente 8 einer zweiten Teilmenge, nämlich der übrigen 6 von 24 Rückführeinrichtung 7, sind dauerhaft in Absperrstellung angeordnet, so dass jederzeit eine ausreichende Abführmöglichkeit für überschüssige Förderluft gegeben ist.

### Bezugszeichenliste

- 1: Verteilmaschine
- 2: Hauptförderleitung
- 3: Fördergebläse
- 4: Vorratsbehälter
- 5: Dosiereinrichtung
- 6: Verteilerkopf
- 7: Rückführeinrichtung
- 8: Umlenkelement
- 8a, 8b: Wippenschenkel
- 9: Einströmbereich
- 10: Ausbringleitung
- 11: Ausbringbereich
- 12: Rückführleitung
- 13: Bypassleitung
- 14: Rückführbereich
- 15: Einspeisebereich
- d1: Durchmesser
- L: Länge
- d2: zweiter Durchmesser
- 16: Krümmer
- 17: Drehachse

## Patentansprüche

1. Pneumatische Verteilmaschine (1) für körniges Material, mit
- zumindest einem Vorratsbehälter (4) für das körnige Material;
- zumindest einem Fördergebläse (3) zur Erzeugung einer Luft-Material-Hauptströmung;
- zumindest einem Verteilerkopf (6), welcher dazu eingerichtet ist, die dem Verteilerkopf (6) zugeleitete Luft-Material-Hauptströmung in mehrere Luft-Material-Einzelströmungen aufzuteilen;
- einer langen, das Fördergebläse (3), den Vorratsbehälter (4) und den Verteilerkopf (6) verbindenden Hauptförderleitung (2); und
- zumindest einer Rückführeinrichtung (77), welche ein bewegliches Umlenkelement (8) aufweist, welches dazu eingerichtet ist, in einer Ausbringstellung eine in einen Einströmbereich (9) der Rückführeinrichtung (7) einströmende Luft-Material-Einzelströmung einem mit einer Ausbringleitung (10) verbundenen Ausbringbereich (11) der Rückführeinrichtung (7) zuzuleiten und in einer Absperrstellung eine in den Einströmbereich (9) der Rückführeinrichtung (7) einströmende Luft-Material-Einzelströmung einem mit einer Rückführleitung (12) der Rückführeinrichtung (7) verbundenen Rückführbereich (14) zuzuleiten; **dadurch gekennzeichnet, dass** die Rückführeinrichtung (7) eine den Rückführbereich (14) der Rückführeinrichtung (7) und den Ausbringbereich (11) der Rückführeinrichtung (7) verbindende Bypassleitung (13) aufweist.

2. Verteilmaschine (1) nach Anspruch 1, **dadurch gekennzeichnet, dass** die lange Hauptförderleitung (2) einen durchströmten Querschnitt mit einem Durchmesser (d1) und eine durchströmte Länge (L) aufweist, dass das Verhältnis von Länge (L) zu Durchmesser (d1) der Hauptförderleitung (2) zumindest 30 beträgt.

3. Verteilmaschine (1) nach zumindest einem der vorstehenden Ansprüche, **dadurch gekennzeichnet, dass** die Rückführleitung (12) der Rückführeinrichtung (7) mit einem Einspeisebereich (15) der Hauptförderleitung (2) verbunden ist, wobei die Hauptförderleitung (2) zwischen dem Einspeisebereich (15) und dem Verteilerkopf (6) einen größeren Querschnitt mit einem zweiten Durchmesser (d2) aufweist als in Strömungsrichtung vor dem Einspeisebereich (15), insbesondere als im Bereich einer in Strömungsrichtung vor dem Einspeisebereich (15) angeordneten Düse, welche in die Hauptförderleitung (2) integriert ist.

4. Verteilmaschine (1) nach Anspruch 3, **dadurch gekennzeichnet, dass** das Verhältnis von Länge (L) der Hauptförderleitung (2) zu dem größeren Durchmesser (d2) der Hauptförderleitung (2) zwischen dem Einspeisebereich (15) und dem Verteilerkopf (6) zumindest 25 beträgt.

5. Verteilmaschine (1) nach zumindest einem der vorstehenden Ansprüche, **dadurch gekennzeichnet, dass** die lange Hauptförderleitung (2) zumindest zwei, vorzugsweise zumindest drei, flexible Schlauchelemente aufweist.

6. Verteilmaschine (1) nach zumindest einem der vorstehenden Ansprüche, **dadurch gekennzeichnet, dass** die lange Hauptförderleitung (2) zumindest zwei Krümmer (16), vorzugsweise mit zumindest 90 Grad Krümmung (16), aufweist.

7. Verteilmaschine (1) nach zumindest einem der vorstehenden Ansprüche, **dadurch gekennzeichnet, dass** das Umlenkelement (8) dazu eingerichtet ist, die Bypassleitung (13) in der Ausbringstellung abzusperren.

8. Verteilmaschine (1) nach Anspruch 7, **dadurch gekennzeichnet, dass** das Umlenkelement (8) dazu eingerichtet ist, die Bypassleitung (13) in der Absperrstellung freizugeben.

9. Verteilmaschine (1) nach Anspruch 7 oder 8, **dadurch gekennzeichnet, dass** das Umlenkelement (8) als Wippe mit zwei Wippenschenkeln (8a, 8b) ausgebildet ist, wobei sich die Wippenschenkel (8a, 8b) jeweils von einer Drehachse (17) des Umlenkelements (8) radial nach außen erstrecken.

10. Verteilmaschine (1) nach Anspruch 9, **dadurch gekennzeichnet, dass**
- ein Wippenschenkel (8b) des Umlenkelements (8) dazu eingerichtet ist, in der Ausbringstellung des Umlenkelements (8) die Bypassleitung (13) der Rückführeinrichtung (7) abzusperren;
- ein Wippenschenkel (8a) des Umlenkelements (8) dazu eingerichtet ist, in der Ausbringstellung des Umlenkelements (8) einen Durchgang zwischen dem Einströmbereich (9) der Rückführeinrichtung (7) und dem Rückführbereich (14) der Rückführeinrichtung (7) abzusperren; und/oder
- zumindest ein Wippenschenkel (8a) des Umlenkelements (8) dazu eingerichtet ist, in der Absperrstellung des Umlenkelements (8) einen Durchgang zwischen dem Einströmbereich (9) der Rückführeinrichtung (7) und dem Ausbringbereich (11) der Rückführeinrichtung (7) abzusperren.

11. Verteilmaschine (1) nach zumindest einem der vorstehenden Ansprüche, **dadurch gekennzeichnet, dass** die Hauptförderleitung (2) einen Druckwiderstand aufweist, wobei der Druckwiderstand zumindest ein Drittel der von dem Fördergebläse (3) erzeugbaren Druckdifferenz beträgt.

12. Verteilmaschine (1) nach zumindest einem der vorstehenden Ansprüche, **dadurch gekennzeichnet, dass** die Verteilmaschine (1) eine Anzahl von Rückführeinrichtungen (7) umfasst, wobei die Umlenkelemente (8) einer ersten Teilmenge der Anzahl von Rückführeinrichtungen (7) zwischen der Ausbringstellung und der Absperrstellung verbringbar sind und die Umlenkelemente (8) einer zweiten Teilmenge, die insbesondere der Menge der übrigen Rückführeinrichtungen (7) entspricht, der Anzahl von Rückführeinrichtungen (7), vorzugsweise dauerhaft, in der Absperrstellung angeordnet sind.
